# EUROPEAN PATENT SPECIFICATION

(11) **EP 2 592 246 B1**
(45) Date of publication and mention of the grant of the patent: **14.10.2020**
(21) Application number: 11803813.2
(22) Date of filing: 07.07.2011
(51) Int. Cl.: B01F 5/04, B01F 5/06, B01F 3/04

(54) **STATIC MIXER FOR MIXING UREA SOLUTION AND ENGINE EXHAUST GAS**
STATISCHER MISCHER ZUM MISCHEN EINER HARNSTOFFLÖSUNG UND EINES MOTORABGASES
MÉLANGEUR STATIQUE POUR MÉLANGER UNE SOLUTION D'URÉE À UN GAZ D'ÉCHAPPEMENT DE MOTEUR

(30) Priority: 08.07.2010 KR 20100065983
(43) Date of publication of application: 15.05.2013
(73) Proprietor: Doosan Infracore Co., Ltd., Dong-gu Incheon 401-020 (KR)
(72) Inventor: CHO, Young Jin, Incheon 401-020 (KR); PARK, Ji Woong, Incheon 401-020 (KR)
(74) Representative: Isarpatent
(86) International application number: PCT/KR2011/004979
(87) International publication number: WO 2012/005527

(56) References cited:
- EP-A2- 1 712 751
- WO-A1-01/49986
- JP-A- 2008 274 852
- KR-A- 20040 030 722
- KR-A- 20080 074 741
- US-A1- 2008 295 497

## Description

### [Technical Field]

The present invention relates to a static mixer for mixing a urea solution and engine exhaust gas, and more particularly, to a static mixer for mixing a urea solution and engine exhaust gas capable of finely and evenly mixing exhaust gas discharged from an exhaust manifold of a diesel engine to an inlet portion of an SCR (Selective Catalytic Reduction) of an exhaust pipe and a urea solution supplied from a urea solution injector of the exhaust pipe to the inlet portion of the SCR in order to decrease an amount of exhaust gas generated during a combustion process of mixed gas of the diesel engine and accompanying nitrogen oxide (NOx) discharged to the atmosphere.

### [Background Art]

In general, a diesel engine injects fuel, such as diesel, into a combustion chamber in a state where air supplied from the outside to the combustion chamber is compressed at a high temperature and high pressure, to generate output by turning force of a crank shaft connected with a connecting rod of a vertically moving piston by explosive force generated during a process of combusting and exploding mixed gas of air and fuel.

In general, in the diesel engine, fuel efficiency is considerably changed according to a mixture ratio (for example, an air-fuel ratio) of the air and the fuel supplied to the combustion chamber. When the amount of air supplied to the combustion chamber is larger than that of the fuel supplied to the combustion chamber, output is greatly increased, but the air supplied to the combustion chamber the air and is harmful to the human body, and an amount of generation of nitrigen oxide (NOx) which is the cause of acid rain, photochemical smog phenomenon, and the like is increased. Contrary to this, when the amount of air supplied to the combustion chamber is smaller than that of the fuel supplied to the combustion chamber, output deteriorates and a PM (particulate matter) or soot is increased.

Because of the aforementioned combustion characteristic of the diesel engine, a recent diesel engine has employed an exhaust gas post-treatment method of increasing the amount of air supplied to the combustion chamber to be larger than of the fuel supplied to the combustion chamber to considerably increase output, and making mixed gas of a urea solution and exhaust gas pass through an SCR by injecting the urea solution to the inlet portion of the SCR to change nitrigen oxide (NOx) accompanied by the exhaust gas to innoxious water (H₂O) and nigrogen (N₂).

In general, a mixer of the diesel engine serving to mix a urea solution and exhaust gas for the exhaust gas post-treatment includes an exhaust pipe including a urea solution injector adapter in which a urea solution injector is simply mounted, and a channel unit installed inside the exhaust pipe and including a plurality of guiding channels.

Accordingly, when the diesel engine is operated, exhaust gas generated in a combustion chamber and the urea solution injected from the urea solution injector are mixed together while passing through the plurality of guiding channels of the channel unit, to be guided to an SCR disposed at a rear side of the mixer, and the nitrogen oxide (NOx) accompanied by the exhaust gas generates catalytic reduction reaction with the urea solution while passing through the SCR to be changed to innoxious water and nitrogen.

However, since the mixer of the diesel engine in the related art has a structure in which the channel unit including the plurality of guiding channels is simply accommodated inside the exhaust pipe, there is a problem in that the exhaust gas discharged from an exhaust manifold of the engine to the mixer is not finely and evenly mixed well with the urea solution supplied from the urea solution injector, so that an amount of nitrogen oxide (NOx) discharged to the atmosphere is not largely decreased.

Further, in the mixer of the diesel engine in the related art, since the exhaust pipe accommodating the channel unit has a form of a single duct, when the urea solution is in direct contact with an inner wall surface of the exhaust pipe directly exposed to the air, the urea solution is not evaporated and flows down along the inner wall surface of the exhaust pipe, so that there is a problem in that the urea solution is not appropriately used for decreasing nitrogen oxide (NOx) and is directly discharged to the outside.

In the published patent prior art, the following document relates to the technological background of the present invention:
D1 EP 1 712 751 A2 (IVECO SPA [IT]) 18 October 2006 (2006-10-18)

Document D1 discloses a static mixer for mixing a urea solution and engine exhaust gas, comprising an external tube including one end portion connected to an exhaust manifold of a diesel engine, the other end portion connected to an SCR, and a part with which a urea solution injection adaptor is provided; and a kind of channel unit provided inside the external tube, comprising a plurality of guiding channels in a longitudinal direction, and having an inlet portion facing a lower end portion of the urea solution injector adaptor.

US 2008/295497 A1 discloses a static mixer for mixing a urea solution and engine exhaust gas according to the preamble of claim 1.

### [Disclosure]

### [Technical Problem]

Accordingly, the present invention has as its object the provision of a static mixer for mixing a urea solution and engine exhaust gas, by which exhaust gas before passing through an SCR and the urea solution can be finely and evenly mixed in order to considerably decrease an amount of nitrogen oxide (NOx) discharged to the atmosphere. This object is solved by a static mixer according to claim 1 and further advantageous embodiments and improvements of the invention are listed in the dependent claims. Hereinafter, before coming to a detailed discussion of the embodiments of the invention, some separate aspects of the invention are listed separately below to support the understanding of the invention.

According to one aspect, the present disclosure provides a static mixer for mixing a urea solution and engine exhaust gas, by which exhaust gas and a urea solution can be finely and evenly mixed by improving an evaporation environment of the urea solution supplied from a urea solution injector to an input portion of an SCR, thereby decreasing an amount of nitrogen oxide (NOx) discharged to the atmosphere and removing waste of the urea solution.

### [Technical Solution]

According to another aspect, the present disclosure provides a static mixer for mixing a urea solution and engine exhaust gas, including: an external tube including one end portion connected to an exhaust manifold of a diesel engine, the other end portion connected to an SCR (Selective Catalytic Reduction), and a part with which a urea solution injection adaptor is provided; an internal tube installed inside the external tube so as to have a constant gap between at least a part of an outer wall surface and an inner wall surface of the external tube; and a channel unit including a plurality of guiding channels provided inside the internal tube in a longitudinal direction, and having a inlet portion facing a lower end portion of the urea solution injector adaptor.

According to a further aspect, the present disclosure further provides detailed exemplary aspects for the exemplary aspect of the present disclosure below.

According to the exemplary aspect of the present disclosure, the internal tube may include at least one protrusion at an outer peripheral portion.

According to the present invention, the channel unit includes a plurality of first channel plates arranged in the internal tube with predetermined intervals therebetween, and a plurality of second channel plates inclined at a predetermined angle with respect to the plurality of first plates and disposed to cross the plurality of first plates with predetermined intervals therebetween.

According to an exemplary aspect of the present disclosure, an exposed portion of at least one of the plurality of first and second channel plates may have at least one through hole so as to achieve a fine and even mixing behavior between the exhaust gas and the urea solution.

According to the present invention, a plurality of blades is provided at an end portion of an outlet side of at least one of the plurality of first and second channel plates so as to achieve a fine and even mixing behavior between the exhaust gas and the urea solution.

According to the present invention, the plurality of blades is inclinedly arranged in an opposite direction for each layer of the first and second channel plates.

According to the present invention, the inlet portion of the channel unit includes a first inclined portion having a predetermined angle with respect to a longitudinal direction of the internal tube, and a second inclined portion having a predetermined angle with respect to the first inclined portion.

According to an exemplary aspect of the present disclosure, an orientation angle of the first inclined portion may be 0 to 30° in an outside direction with respect to a virtual axial line perpendicular to the longitudinal direction of the internal tube.

According to an exemplary aspect of the present disclosure, each of end surfaces of the first and second inclined portions at an end surface of an inlet side may have a shape of a straight line, a curved line, or a combination thereof.

According to an exemplary aspect of the present disclosure, the respective three first and second channel plates are included so as to form four rooms in one direction and the other direction, respectively.

According to an exemplary aspect of the present disclosure, the gap between the internal tube and the external tube is 5 to 10 mm.

### [Advantageous Effects]

According to the above aspects, the present invention may form fine and even mixed gas by providing the channel unit having the plurality of guiding channels and the inlet portion inside the internal tube shaped like a dual tube including the external tube surrounding the internal tube at a predetermined gap, and making the exhaust gas and the urea solution before passing through the SCR pass through the inlet portion and the plurality of guiding channels of the channel unit, thereby largely decreasing an amount of nitride oxide (NOx) discharged to the outside by improving a catalytic reduction reaction ratio in the SCR.

Further, the present aspects of the invention provides the channel unit including the plurality of guiding channels and the inlet portion inside the internal tube shaped like a dual tube to insulate the internal tube against the external tube directly exposed to the outside, so that an evaporation ratio of the urea solution supplied from the urea solution injector to the inlet portion and the plurality of guiding channels of the channel unit, thereby decreasing an amount of nitride oxide (NOx) discharged to the outside and removing waste of the urea solution.

### [Description of Drawings]

FIG. 1 is a schematic perspective view illustrating a static mixer for mixing a urea solution and engine exhaust gas according to an embodiment of the present invention.
FIG. 2 is a schematic perspective view illustrating an end portion of an outlet of the static mixer according to an embodiment of the present invention.
FIG. 3 is a schematic perspective view illustrating an internal tube and a channel unit provided inside the internal tube of the static mixer according to an embodiment of the present invention.
FIG. 4 is a schematic cross-sectional view illustrating an angle orientation relation between a first inclined portion of a inlet portion provided at the channel unit and an external tube of the static mixer according to an embodiment of the present invention.

### [Description of Main Reference Numerals of Drawings]

| | | | |
|---|---|---|---|
| 1: | Static mixer | 102: | External tube |
| 3: | Internal tube | 3a: | Protrusion |
| 11: | Guiding channel | 12: | Bent inlet portion |
| 12a: | First inclined portion | 12b: | Second inclined portion |
| 13: | First channel plate | 14: | Second channel plate |
| 15: | Through-hole | 16: | Blade |

### [Best Mode]

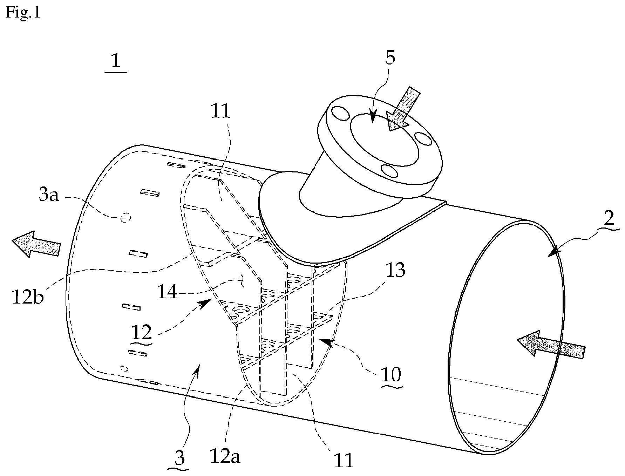

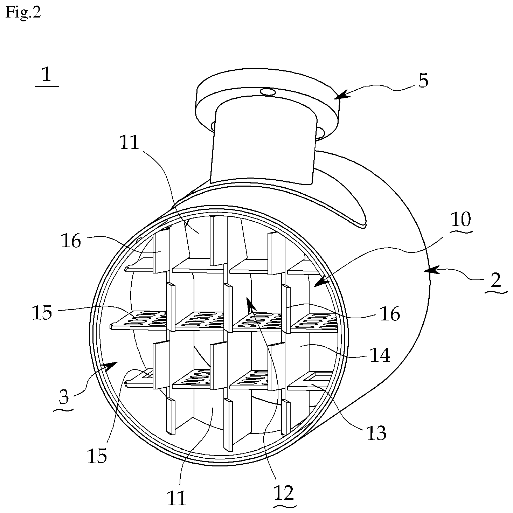

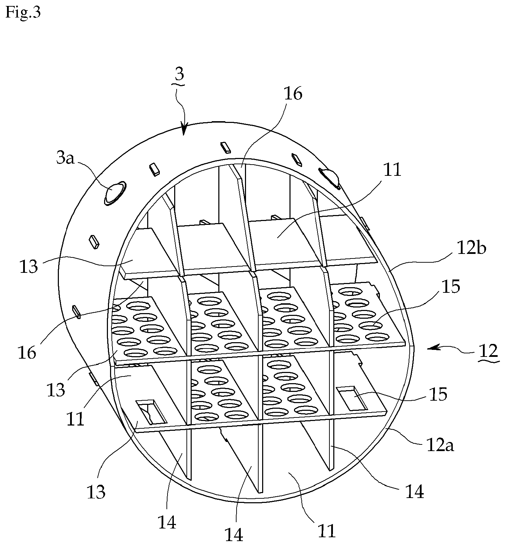

Hereinafter, an exemplary embodiment of a static mixer for mixing a urea solution and engine exhaust gas according to the present invention will be described with reference to FIGS. 1 to 4.

First, a term "static mixer" is an expression widely used in a corresponding business field and is a counterpart concept to a dynamic mixer, and means a mixer (or a mixing device) for finely and evenly mixing exhaust gas and a urea solution without a dynamic motion.

Further, in a description of the present invention, two terms of "a plurality of" and "multiple" are discriminatingly used. The term of "a plurality of" is used so as to emphasize a case in which a technical meaning is significant when the number of corresponding constituent elements is two or more, and the term of "multiple" is used so as to represent a case in which there are simply a lot of corresponding constituent elements.

The static mixer 1 of the present invention includes, as illustrated in FIGS. 1 to 3, an external tube 2, an internal tube 3, and a channel unit 10. Here, one end portion of the external tube 2 is connected to an exhaust manifold (not illustrated) of a diesel engine, and the other end portion is connected to an SCR (not illustrated), and a urea solution injector adaptor 5 is provided at a part of the external tube 2. The external tube 2 may be connected to an exhaust pipe (not illustrated) by a welding method or a detachable method.

The internal tube 3 is fixed while being accommodated inside the external tube 2 so that at least one portion of an outer wall surface of the internal tube 3 has a constant gap from an inner wall surface of the external tube 2.

The channel unit 10 is provided inside the internal tube 3 and includes multiple guiding channels 11 in a longitudinal direction, and has a inlet portion 12 facing a lower end portion of the urea solution injector adaptor 5.

According to the static mixer 1 of the present invention, exhaust gas discharged from the exhaust manifold to the static mixer 1 of the diesel engine and the urea solution supplied from a urea solution injector (not illustrated) installed in the urea solution injector adaptor 5 of the static mixer 1 to the static mixer 1 are finely and evenly mixed with each other while passing through the channel unit 10 including the bent inlet portion 12 and the multiple guiding channels 11.

Further, according to the static mixer 1 of the present invention, the urea solution supplied from the urea solution injector (not illustrated) installed in the urea solution injector adaptor 5 to the static mixer 1 may be injected to the channel unit 10 inside the internal tube 3, thereby solving a problem of the related art in that the urea solution is in directly contact with the inner wall surface of the external tube 2 to be changed in a liquid state and flow down along the inner wall surface of the external tube 2.

Accordingly, the static mixer 1 of the present invention enables mixed gas of the exhaust gas and the urea solution finely and evenly mixed well while passing through the static mixer to well have a catalytic reduction reaction when passing through the SCR (not illustrated), thereby eventually greatly decreasing an amount of nitrogen oxide (NOx) discharged to the air and decreasing waste of the urea solution.

Further, the static mixer for mixing the urea solution and the engine exhaust gas

Further, the static mixer for mixing the urea solution and the engine exhaust gas according to the present invention may be implemented as a form further defined by detailed exemplary embodiments below in addition to the aforementioned fundamental configuration.

As an exemplary embodiment, the internal tube 3 may be provided in a form having at least one or more protrusions 3a at an outer peripheral portion so as to maintain a constant gap from the external tube 2. The protrusion 3a may be formed at one point, two points, three points, or more points than three points in the external surface of the internal tube 3 while having a predetermined interval therebetween. The gap between the internal tube 3 and the external tube 2 may be conveniently formed by a structure of the protrusion of the internal tube. The gap between the internal tube 3 and the external tube 2 may be formed by interposing a separate insulating spacer (not illustrated).

According to the invention, the channel unit 10 includes a plurality of first channel plates 13 arranged in the internal tube 3 with predetermined intervals therebetween, and a plurality of second channel plates 14 inclined with respect to the plurality of first plates 13 at a predetermined angle, and disposed to cross the plurality of first plates 13 with predetermined intervals therebetween. The plurality of guiding channels 11 for guiding the exhaust gas, the urea solution, or mixed gas in which the exhaust gas is mixed with the urea solution is conveniently formed by a structure of the plurality of first and second channel plates.

As the exemplary aspect, an exposed portion of at least one of the plurality of first and second channel plates 13 and 14 may be provided in a form having at least one through-hole 15 so that the exhaust gas and the urea solution are evenly mixed. In this case, the through hole 15 may have various shapes, such as a circular shape, an elliptical shape, a slit, or a slot. A structure of the through-hole of the plurality of first and second channel plates improves an active mixing behavior between the exhaust gas and the urea solution guided to the adjacent guiding channels among the plurality of guiding channels 11.

As the exemplary embodiment, a plurality of blades 16 are provided at an end portion of an outlet side of at least one of the plurality of first and second channel plates 13 and 14 so that the exhaust gas and the urea solution are finely and evenly mixed. In this case, the plurality of blades 16 are inclinedly arranged in an opposite direction for each layer of the first and second channel plates 13 and 14. This is because an active mixing behavior between the exhaust gas and the urea solution is improved by creating a vortex phenomenon in the exhaust gas and the urea solution passing through the end portions of the outlet sides of the plurality of first and second channels plates 13 and 14.

As the exemplary embodiment, the internal tube 3 may be fixed concentrically or eccentrically with respect to the external tube 2. In this case, a structure in which the internal tube 3 is disposed concentrically with respect to the external tube 2 has an advantage in that the gap between the internal tube 3 and the external tube 2 may be regularly formed. A structure in which the internal tube 3 is disposed eccentrically with respect to the external tube 2 has an advantage in that the internal tube 3 may be simply and conveniently fixed to the external tube 2.

Otherwise, the gap between the internal tube 3 and the external tube 2 may be 5 to 10 mm. This is because there is a disadvantage in that an insulation effect of the internal tube 3 against the external tube 2 is decreased when the gap between the internal tube 3 and the external tube 2 is less than 5 mm, and there are high concerns regarding the direct discharge of a part of the exhaust toward the SCR without the mixing behavior with the urea solution when the gap between the internal tube 3 and the external tube 2 exceeds 10 nm.

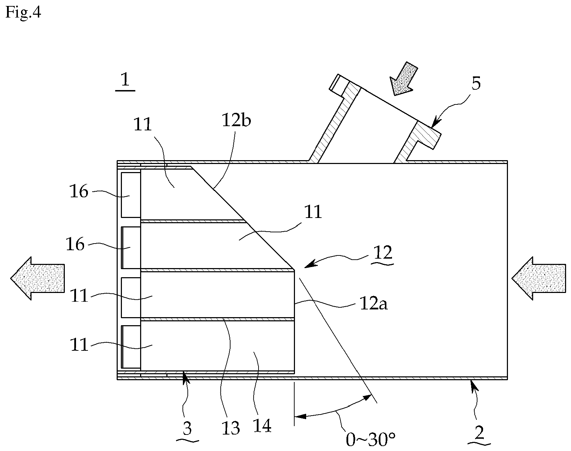

According to the invention, the bent inlet portion 12 of the channel unit 10 includes a first inclined portion 12a having a predetermined angle with respect to a longitudinal direction of the internal tube 3, and a second inclined portion 12b having a predetermined angle with respect to the first inclined portion 12a. In this case, as illustrated in FIG. 4, an orientation angle of the first inclined portion 12a may be 0 to 30° in an outside direction with respect to a virtual axial line perpendicular to the longitudinal direction of the internal tube 3. This is because there is a disadvantage in that when the orientation angle of the first inclined portion 12a is smaller than 0° (that is, the first inclined portion 12a is inwardly formed with respect to the vertical axial line of the internal tube), or exceeds 30°, the mixture ratio of the exhaust gas to the urea solution is remarkably decreased compared to a case where the orientation angle of the first inclined portion 12a has the aforementioned range. Otherwise, end surfaces of the first and second inclined portions 12a and 12b at the inlet side may be formed in a shape of a straight line, a curved line, or a combination thereof.

As the exemplary embodiment, the three first channel plates 13 and the three second channel plates 14 may be included so as to have four rooms in one direction and the other direction, respectively. The structure of the plurality of first and second channel plates having the aforementioned arrangement improves the mixing behavior between the exhaust gas and the urea solution compared to a case where the number of each of the first and second channels plates is smaller than 3 or exceeds 3. This is because discharge pressure of the exhaust gas and/or mixing power between the exhaust gas and the urea solution is changed according to a dense arrangement or sparse arrangement of the plurality of first and second channel plates 13 and 14.

An operation of the static mixer for mixing the urea solution and the exhaust gas configured as described above will be described with reference to FIGS. 1 to 4 below.

When the static mixer 1 according to the present invention is installed at the inlet side of the SCR so as to form a partial portion of the exhaust pipe connecting the exhaust manifold (not illustrated) and the SCR (not illustrated) of the diesel engine and a diesel engine is operated, exhaust gas generated at the time of combustion and explosion in the combustion chamber of the diesel engine during the operation of the diesel engine is discharged toward the inlet portion of the channel unit 10 of the static mixer 1 through the exhaust manifold.

Further, a urea solution is simultaneously injected from the urea solution injector (not illustrated) installed in the urea solution injector adaptor 5 of the external tube 2 of the static mixer 1 to the inlet portion of the channel unit 10 of the static mixer 1.

In this case, the exhaust gas and the urea solution are primarily finely and evenly mixed together while flowing inside the plurality of guiding channels 11 through the bent inlet portion 12 of the channel unit 10. In the meantime, in a case of the aspect in which the through-hole 15 is further provided at the exposed portions of the first and second channel plates 13 and 14 of the channel unit 10, the mixing behavior between the exhaust gas and the urea solution passing through the plurality of guiding channels 11 may be more actively performed.

Subsequently, the exhaust gas and the urea solution discharged to the end portion of the outlet side of the channel unit 10 through the plurality of guiding channels 11 of the channel unit 10 generate a vortex while crashing against the plurality of blades 16 of the channel unit 10, thereby being more finely and evenly mixed secondarily.

Mixed gas of the exhaust gas and the urea solution, which become fine and even in an optimum state while passing through the channel unit 10 of the static mixer 1 according to the present invention, is guided to the SCR. Then, the nitrogen oxide (NOx) accompanied by the exhaust gas incurs a catalytic reduction reaction with the urea solution while passing through the SCR to be changed to innoxious water (H₂O) and nitrogen (N₂) and discharged to the air.

The aforementioned present invention is not limited to the aforementioned exemplary embodiments and the accompanying drawings, and simple substitution, change, and modifications are covered under the scope of protection as prescribed by Article 69 of the EPC protocol.

### [Industrial Applicability]

The static mixer for mixing a urea solution and engine exhaust gas according to the present invention is installed at a side of an exhaust pipe of a diesel engine to change nitrogen oxide (NOx) accompanied by the exhaust gas into innoxious water (H₂O) and nitrogen (N₂), so that the static mixer is usable for decreasing atmosphere environmental pollution.

## Claims

1. A static mixer (1) for mixing a urea solution and engine exhaust gas, comprising:
a) an external tube (2) including one end portion connected to an exhaust manifold of a diesel engine, the other end portion connected to an SCR (Selective Catalytic Reduction), and a part with which a urea solution injection adaptor (5) is provided;
b) an internal tube (3) installed inside the external tube (2) so as to have a constant gap between at least a part of an outer wall surface and an inner wall surface of the external tube (2);
c) a channel unit (10) provided inside the internal tube (3), comprising a plurality of guiding channels (11) in a longitudinal direction, and having an inlet portion (12, 12a, 12b) facing a lower end portion of the urea solution injector adaptor (5);
d) wherein the inlet portion (12) of the channel unit (10) includes a first inclined portion (12a) having a predetermined angle with respect to a longitudinal direction of the channel unit (10), and a second inclined portion (12b) having a predetermined angle with respect to the first inclined portion (12a), and is installed inside the internal tube (3);
e) **characterized in that** the channel unit (10) comprises a plurality of first channel plates (13) arranged, in the longitudinal direction, with predetermined intervals therebetween, and a plurality of second channel plates (14) inclined at a predetermined angle with respect to the plurality of first plates (13) and disposed to cross the plurality of first plates (13) with predetermined intervals therebetween; and
f) **in that** a plurality of blades (16) is provided at an end portion of an outlet side of at least one of the plurality of first and second channel plates (13, 14) so as to achieve a fine and even mixing behavior between the exhaust gas and the urea solution;
g) **in that** the plurality of blades (16) is inclinedly arranged in an opposite direction for each layer of the first and second channel plates (13, 14).

2. The static mixer of claim 1, wherein the internal tube (3) includes at least one protrusion (3a) at an outer peripheral portion.

3. The static mixer of claim 1, wherein an orientation angle of the first inclined portion (12a) is 0 to 30° in an outside direction with respect to a virtual axial line perpendicular to the longitudinal direction of the internal tube (3).

4. The static mixer of claim 1, wherein each of end surfaces of the first and second inclined portions (12a, 12b) at an end surface of an inlet side has a shape of a straight line, a curved line, or a combination thereof.

5. The static mixer of claim 1, wherein the respective three first and second channel plates (13, 14) are included so as to form four rooms in one direction and the other direction, respectively.

6. The static mixer of claim 1, wherein the gap between the internal tube (3) and the external tube (2) is 5 to 10 mm.

7. The static mixer of claim 1, wherein at least one through-hole (15) is further provided at the exposed portion of the first and/or second channel plates (13, 14).

## Patentansprüche

1. Statischer Mischer (1) zum Mischen einer Harnstofflösung und eines Motorabgases, umfassend:
a) eine externe Röhre (2), die einen mit einem Abgaskrümmer eines Dieselmotors verbundenen Endabschnitt, wobei der andere Endabschnitt mit einer SCR (selektiven katalytischen Reduktion) verbunden ist, und einen Teil, mit dem ein Harnstofflösung-Einspritzadapter (5) vorgesehen ist, aufweist;
b) eine interne Röhre (3), die im Inneren der externen Röhre (2) installiert ist, so dass sie einen konstanten Spalt zwischen mindestens einem Teil einer Außenwandfläche und einer Innenwandfläche der externen Röhre (2) aufweist;
c) eine Kanaleinheit (10), die im Inneren der internen Röhre (3) vorgesehen ist, die mehrere Führungskanäle (11) in einer Längsrichtung aufweist und die einen Einlassabschnitt (12, 12a, 12b), der einem unteren Endabschnitt des Harnstofflösung-Einspritzadapters (5) zugewandt ist, aufweist;
d) wobei der Einlassabschnitt (12) der Kanaleinheit (10) einen ersten geneigten Abschnitt (12a) mit einem vorbestimmten Winkel in Bezug auf eine Längsrichtung der Kanaleinheit (10) und einen zweiten geneigten Abschnitt (12b) mit einem vorbestimmten Winkel in Bezug auf den ersten geneigten Abschnitt (12a) aufweist und im Inneren der internen Röhre (3) installiert ist;
e) **dadurch gekennzeichnet, dass** die Kanaleinheit (10) mehrere erste Kanalplatten (13), die in der Längsrichtung mit vorbestimmten Abständen dazwischen angeordnet sind, und mehrere zweite Kanalplatten (14), die in einem vorbestimmten Winkel in Bezug auf die mehreren ersten Platten (13) geneigt und angeordnet sind, um die mehreren ersten Platten (13) mit vorbestimmten Abständen dazwischen zu kreuzen, umfasst; und
f) dadurch, dass mehrere Flügel (16) an einem Endabschnitt einer Auslassseite von den mehreren ersten und/oder zweiten Kanalplatten (13, 14) vorgesehen sind, um ein feines und gleichmäßiges Mischverhalten zwischen dem Abgas und der Harnstofflösung zu erreichen;
g) dadurch, dass die mehreren Flügel (16) für jede Schicht der ersten und der zweiten Kanalplatten (13, 14) in einer entgegengesetzten Richtung geneigt angeordnet sind.

2. Statischer Mischer nach Anspruch 1, wobei die interne Röhre (3) mindestens einen Vorsprung (3a) an einem äußeren Umfangsabschnitt aufweist.

3. Statischer Mischer nach Anspruch 1, wobei ein Ausrichtungswinkel des ersten geneigten Abschnitts (12a) 0 bis 30° in einer Richtung nach außen in Bezug auf eine virtuelle Axiallinie senkrecht zu der Längsrichtung der internen Röhre (3) beträgt.

4. Statischer Mischer nach Anspruch 1, wobei jede Endfläche des ersten und des zweiten geneigten Abschnitts (12a, 12b) an einer Endfläche einer Einlassseite eine Form einer geraden Linie, einer gekrümmten Linie oder einer Kombination daraus aufweist.

5. Statischer Mischer nach Anspruch 1, wobei die jeweiligen drei ersten und zweiten Kanalplatten (13, 14) vorgesehen sind, so dass sie vier Räume jeweils in einer Richtung und der anderen Richtung bilden.

6. Statischer Mischer nach Anspruch 1, wobei der Spalt zwischen der internen Röhre (3) und der externen Röhre (2) 5 bis 10 mm beträgt.

7. Statischer Mischer nach Anspruch 1, wobei ferner mindestens ein Durchgangsloch (15) an dem freiliegenden Abschnitt der ersten und/oder der zweiten Kanalplatten (13, 14) vorgesehen ist.

## Revendications

1. Mélangeur statique (1) pour mélanger une solution d'urée et des gaz d'échappement de moteur, comprenant :
a) un tube externe (2) incluant une partie d'extrémité reliée à un collecteur d'échappement d'un moteur diesel, l'autre partie d'extrémité reliée à une SCR (réduction catalytique sélective) et une partie avec laquelle un adaptateur d'injection de solution d'urée (5) est prévu ;
b) un tube interne (3) installé à l'intérieur du tube externe (2) de manière à ce qu'il y ait un espace constant entre au moins une partie d'une surface de paroi extérieure et une surface de paroi intérieure du tube externe (2) ;
c) une unité de canaux (10) prévue à l'intérieur du tube interne (3), comprenant une pluralité de canaux de guidage (11) dans une direction longitudinale et ayant une partie d'entrée (12, 12a, 12b) faisant face à une partie d'extrémité inférieure de l'adaptateur d'injecteur de solution d'urée (5) ;
d) dans lequel la partie d'entrée (12) de l'unité de canaux (10) inclut une première partie inclinée (12a) faisant un angle prédéterminé par rapport à une direction longitudinale de l'unité de canaux (10), et une seconde partie inclinée (12b) faisant un angle prédéterminé par rapport à la première partie inclinée (12a), et est installée à l'intérieur du tube interne (3) ;
e) **caractérisé en ce que** l'unité de canaux (10) comprend une pluralité de premières plaques de canal (13) agencées, dans la direction longitudinale, avec des intervalles prédéterminés entre elles, et une pluralité de secondes plaques de canal (14) inclinées d'un angle prédéterminé par rapport à la pluralité de premières plaques (13) et disposées de façon à croiser la pluralité de premières plaques (13) avec des intervalles prédéterminés entre elles ; et
f) **en ce qu'**une pluralité de pales (16) est prévue à une partie d'extrémité d'un côté de sortie d'au moins une de la pluralité de premières et secondes plaques de canal (13, 14) de manière à obtenir un comportement de mélange fin et uniforme entre les gaz d'échappement et la solution d'urée ;
g) **en ce que** la pluralité de pales (16) est agencée de manière inclinée dans une direction opposée pour chaque couche des premières et secondes plaques de canal (13, 14) .

2. Mélangeur statique selon la revendication 1, dans lequel le tube interne (3) comporte au moins une saillie (3a) sur une partie périphérique extérieure.

3. Mélangeur statique selon la revendication 1, dans lequel un angle d'orientation de la première partie inclinée (12a) est de 0 à 30° dans une direction extérieure par rapport à une ligne axiale virtuelle perpendiculaire à la direction longitudinale du tube interne (3).

4. Mélangeur statique selon la revendication 1, dans lequel chacune des surfaces d'extrémité des première et seconde parties inclinées (12a, 12b) sur une surface d'extrémité d'un côté d'entrée a la forme d'une ligne droite, d'une ligne courbe ou d'une combinaison de celles-ci.

5. Mélangeur statique selon la revendication 1, dans lequel les trois premières et secondes plaques de canal respectives (13, 14) sont prévues de manière à former quatre chambres dans une direction et dans l'autre direction, respectivement.

6. Mélangeur statique selon la revendication 1, dans lequel l'espace entre le tube interne (3) et le tube externe (2) est de 5 à 10 mm.

7. Mélangeur statique selon la revendication 1, dans lequel au moins un trou traversant (15) est en outre prévu dans la partie exposée des premières et/ou secondes plaques de canal (13, 14).
